# DEMANDE DE BREVET EUROPEEN

(11) **EP 2 104 007 A1**
(43) Date de publication de la demande: **23.09.2009**
(21) Numéro de dépôt: 08153099.0
(22) Date de dépôt: 20.03.2008
(51) Int. Cl.: G04B 17/06, G04B 17/34, G04D 3/00, F16F 1/10

(54) **Spiral monobloc en matériau à base de silicium et son procédé de fabrication**

(71) Demandeur: Nivarox-FAR S.A., CH-2400 Le Locle (CH)
(72) Inventeur: Bühler, Pierre-André, 2534, Orvin (CH); Verardo, Marco, 2336, Les Bois (CH); Conus, Thierry, 2543, Lengnau (CH); Thiébaud, Jean-Philippe, 1588, Cudrefin (CH); Peters, Jean-Bernard, 2300, La Chaux-de-Fonds (CH); Cusin, Pierre, 1423, Villars-Burquin (CH)
(74) Mandataire: Couillard, Yann Luc Raymond

(57) **Abrégé**

L'invention se rapporte à un spiral (51 "') comportant un ressort-spiral (53"') monté coaxialement sur une virole (55"'), lesquels sont réalisés dans une même couche (21) de matériau à base de silicium. Selon l'invention, la virole (55"') comporte une partie (19) en prolongement faisant saillie dudit ressort-spiral (53"') qui est réalisé dans une deuxième couche (5) de matériau à base de silicium afin de pouvoir adapter l'espacement dudit spiral (51 "') avec un autre élément.

L'invention se rapporte également à une pièce d'horlogerie comportant un tel spiral et au procédé de fabrication associé.

L'invention concerne le domaine des mouvements horlogers.

## Description

### DOMAINE DE L'INVENTION

L'invention se rapporte à un spiral et son procédé de fabrication et, plus particulièrement, à un spiral monobloc en matériau à base de silicium.

### ARRIERE PLAN DE L'INVENTION

L'organe régulateur d'une pièce d'horlogerie comporte généralement un volant d'inertie appelé balancier et un résonateur appelé spiral. Ces pièces sont déterminantes pour la qualité de marche de la pièce d'horlogerie. En effet, ils régulent le mouvement, c'est-à-dire qu'ils contrôlent la fréquence du mouvement.

Le balancier et le spiral sont de nature différente ce qui rend la mise au point de l'organe régulateur, qui comprend les fabrications propres du balancier et du spiral ainsi que leur assemblage sensiblement en résonance, extrêmement complexe.

Le spiral a ainsi été fabriqué dans divers matériaux notamment afin de limiter l'influence d'un changement de température sur l'organe régulateur dans lequel il est intégré sans que les difficultés d'assemblage ou de mise au point en résonance ne disparaissent.

### RESUME DE L'INVENTION

Le but de la présente invention est de pallier tout ou partie les inconvénients cités précédemment en proposant un spiral monobloc dont le coefficient thermo-élastique peut être ajusté et dont la fabrication, par un procédé comportant peu d'étapes, permet d'améliorer ses qualités intrinsèques.

A cet effet, l'invention se rapporte à un spiral comportant un ressort-spiral monté coaxialement sur une virole, lesquels sont réalisés dans une même couche de matériau à base de silicium **caractérisé en ce que** la virole comporte une partie en prolongement faisant saillie dudit ressort-spiral et qui est réalisé dans une deuxième couche de matériau à base de silicium afin de pouvoir adapter l'espacement dudit spiral avec un autre élément tout en améliorant le guidage dudit spiral.

Conformément à d'autres caractéristiques avantageuses de l'invention :
- le ressort-spiral comporte au moins une partie en dioxyde de silicium afin de le rendre plus résistant mécaniquement et d'ajuster son coefficient thermo-élastique ;
- la virole comporte un diamètre intérieur uniforme ;
- le diamètre intérieur de la partie en prolongement est différent de celui du reste de la virole ce qui permet de rendre, par exemple, un axe solidaire que d'une partie de la virole ;
- le diamètre intérieur de la virole comporte au moins une partie de la section de forme circulaire ;
- le diamètre intérieur de la virole comporte au moins une partie de la section de forme polygonale ce qui permet d'améliorer la transmission de l'effort par rotation, par exemple, d'un axe de forme correspondante ;
- la virole comporte une partie métallique permettant audit spiral de recevoir par chassage un axe ce qui évite de détériorer les parties en matériau à base de silicium ;
- la spire interne du ressort-spiral comporte une courbe du type Grossmann afin d'améliorer la concentricité du développement dudit spiral.

Plus généralement, l'invention se rapporte également à une pièce d'horlogerie comprenant un spiral conforme à l'une des variantes précédentes.

Enfin l'invention se rapporte à un procédé de fabrication d'un organe horloger comportant les étapes suivantes :
a) se munir d'un substrat comportant une couche supérieure et une couche inférieure en matériaux à base de silicium ;
b) graver sélectivement au moins une cavité dans la couche supérieure pour définir le motif d'une première partie en matériau à base de silicium dudit organe ;
   **caractérisé en ce qu**'il comporte en outre les étapes suivantes :
c) solidariser, sur la couche supérieure gravée du substrat, une couche supplémentaire de matériau à base de silicium ;
d) graver sélectivement au moins une cavité dans la couche supplémentaire pour continuer le motif de ladite première partie et définir le motif d'une deuxième partie en matériau à base de silicium dudit organe ;
e) libérer l'organe du substrat.

Conformément à d'autres caractéristiques avantageuses de l'invention :
- la première partie dudit organe est une virole et la deuxième partie est un ressort-spiral ;
- pendant l'étape e) on réalise l'étape f) : retirer la couche inférieure par attaque chimique et/ou mécanique ;
- après l'étape d) on réalise l'étape g) : oxyder la deuxième partie en matériau à base de silicium dudit organe afin d'ajuster son coefficient thermo-élastique mais également de la rendre mécaniquement plus résistant ;
- avant l'étape d), on réalise l'étape h) : déposer sélectivement au moins une couche de métal sur la couche supplémentaire pour définir le motif d'au moins une partie en métal dudit organe destinée à recevoir par chassage un axe ;
- l'étape h) comporte l'étape i) : faire croître ledit dépôt par couches successives métalliques au moins partiellement sur la surface de la couche supplémentaire afin de former une partie métallique destinée à recevoir par chassage un axe ;
- l'étape h) comporte les étapes j) : graver sélectivement au moins une cavité dans la couche supplémentaire destinée à recevoir ladite au moins une partie en métal et k) : faire croître ledit dépôt par couches successives métalliques au moins partiellement dans ladite au moins une cavité afin de former une partie métallique destinée à recevoir par chassage un axe ;
- que l'étape h) comporte la dernière étape I): polir le dépôt métallique ;
- plusieurs organes sont réalisés sur un même substrat ce qui permet une production en série.

### DESCRIPTION SOMMAIRE DES DESSINS

D'autres particularités et avantages ressortiront clairement de la description qui en est faite ci-après, à titre indicatif et nullement limitatif, en référence aux dessins annexés, dans lesquels :
- les figures 1 à 5 représentent des vues successives du procédé de fabrication selon l'invention ;
- les figures 6 à 8 représentent des vues des étapes successives de modes de réalisation alternatifs ;
- la figure 9 représente un schéma fonctionnel du procédé selon l'invention.
- les figures 10 et 11 sont des représentations en perspective d'un organe régulateur monobloc selon un premier mode de réalisation ;
- les figures 12 et 13 sont des représentations en perspective d'un organe régulateur monobloc selon un deuxième mode de réalisation ;
- les figures 14 et 15 sont des représentations en perspective d'un organe régulateur monobloc selon un troisième mode de réalisation ;
- la figure 16 est une représentation en perspective d'un spiral monobloc selon l'invention ;
- La figure 17 est une représentation similaire à la figure 16 dans laquelle la spire externe est modifiée.

### DESCRIPTION DETAILLEE DES MODES DE REALISATION PREFERES

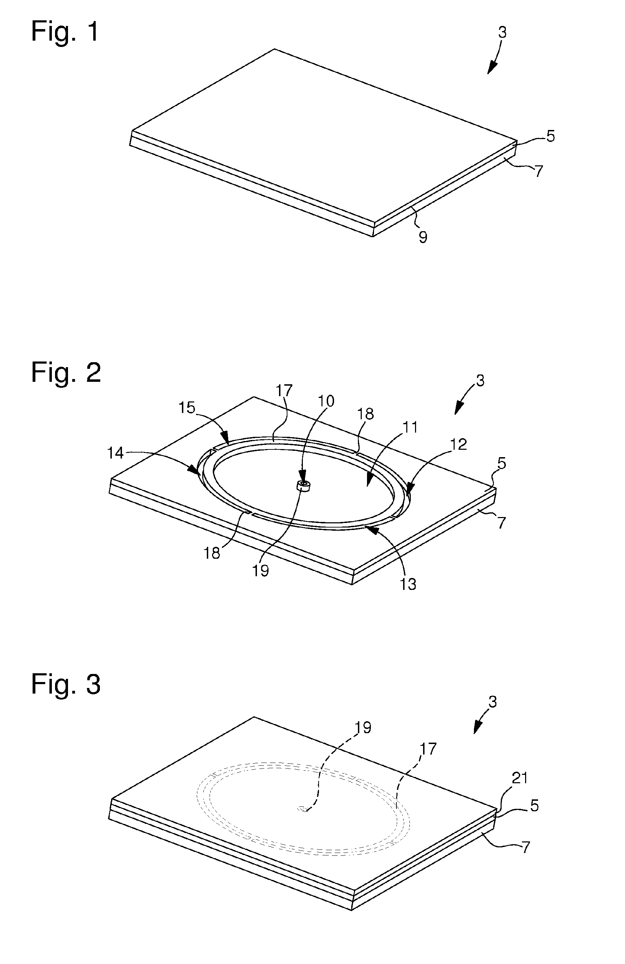

L'invention se rapporte à un procédé généralement annoté 1 destiné à fabriquer un spiral 51'" ou un organe régulateur complet 41, 41', 41" pour un mouvement de pièce d'horlogerie. Comme illustré aux figures 1 à 9, le procédé 1 comporte des étapes successives destinées à former au moins un type de pièce 51'", 41 monobloc qui peut être formé intégralement en matériaux à base de silicium.

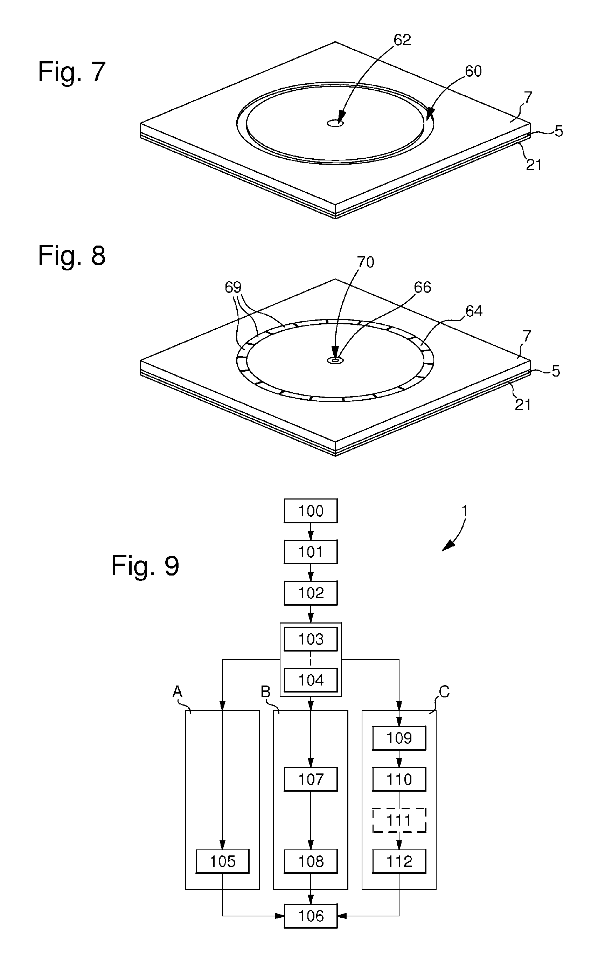

En référence aux figures 1 et 9, la première étape 100 consiste à se munir d'un substrat 3 du type silicium sur isolant (également connu sous l'acronyme anglais SOI). Le substrat 3 comporte une couche supérieure 5 et une couche inférieure 7 composées chacune de matériau à base de silicium.

Préférentiellement dans cette étape 100, le substrat 3 est choisi afin que la hauteur de la couche inférieure 7 corresponde à la hauteur d'une partie de l'organe régulateur final 41, 41', 41". De plus, la couche inférieure 7 doit comporter une épaisseur suffisante afin de supporter les efforts induits par le procédé 1. Une telle épaisseur peut être par exemple comprise entre 300 et 400 µm.

Préférentiellement, la couche supérieure 5 est utilisée comme moyen d'espacement par rapport à la couche inférieure 7. Par conséquent, la hauteur de la couche supérieure 5 sera adaptée en fonction de la configuration du spiral 51'" ou de l'organe régulateur 41, 41', 41". Selon ladite configuration, l'épaisseur de la couche supérieure 5 peut ainsi osciller, par exemple, entre 10 et 200 µm.

Dans une deuxième étape 101, comme visible à la figure 2, des cavités 10, 11, 12, 13, 14 et 15 sont sélectivement gravées, par exemple par un procédé de gravure ionique réactive profonde (également connu sous l'acronyme anglais DRIE), dans la couche supérieure 5 en matériau à base de silicium. Préférentiellement, ces cavités 10, 11, 12, 13, 14 et 15 permettent de former deux motifs 17, 19 définissants les contours intérieur et extérieur de parties en silicium de l'organe régulateur 41, 41', 41".

Dans l'exemple illustré à la figure 2, les motifs 17 et 19 sont sensiblement en forme de cylindres coaxiaux à section circulaire, le motif 17 comportant un diamètre plus grand que celui du motif 19. Cependant, avantageusement selon le procédé 1, la gravure sur la couche supérieure 5 laisse toute liberté sur la géométrie des motifs 17 et 19. Ainsi, notamment, les motifs 17 et 19 ne sont pas forcément circulaires mais, par exemple, elliptiques ou comporter un diamètre intérieur non circulaire.

Préférentiellement, des ponts de matière 18 sont laissés afin de maintenir au substrat 3 l'organe régulateur 41, 41', 41" lors de sa fabrication. Dans l'exemple illustré à la figure 2, il y a quatre ponts de matière 18 qui subsistent respectivement entre chacune des cavités consécutives 12, 13, 14 et 15 distribuées en arc de cercle à la périphérie du motif 17.

Dans une troisième étape 102, comme visible à la figure 3, une couche supplémentaire 21 en matériau à base de silicium est ajoutée au substrat 3. Préférentiellement, la couche supplémentaire 21 est fixée sur la couche supérieure 5 au moyen d'un soudage par fusion du silicium (également connu sous l'acronyme anglais SFB). L'étape 102 permet avantageusement de recouvrir la couche supérieure 5 en liant avec une très forte adhérence notamment les faces supérieures des motifs 17 et 19 sur la face inférieure de la couche supplémentaire 21. La couche supplémentaire 21 peut, par exemple, comporter une épaisseur comprise entre 100 et 150 µm.

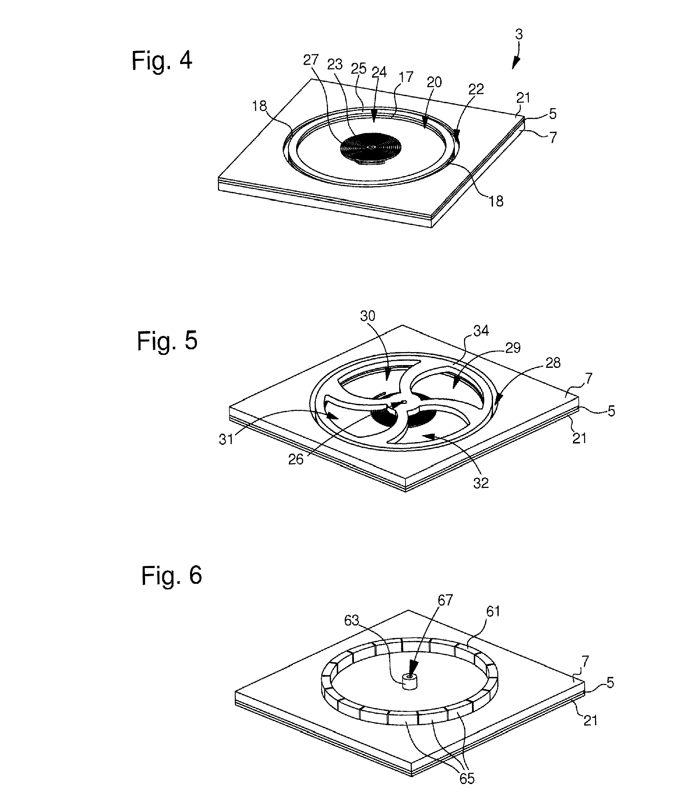

Dans une quatrième étape 103, comme visible à la figure 4, des cavités 20, 22 et 24 sont sélectivement gravées, par exemple, par un procédé du type DRIE semblable à celui de l'étape 101, dans la couche supplémentaire 21 en matériau à base de silicium. Ces cavités 20, 22 et 24 permettent de former trois motifs 23, 25 et 27 définissants les contours intérieur et extérieur de parties en silicium de l'organe régulateur 41, 41', 41 ".

Dans l'exemple illustré à la figure 4, les motifs 23 et 25 sont sensiblement en forme de cylindres coaxiaux à section circulaire et, le motif 27, sensiblement en forme de spirale. Cependant, avantageusement selon le procédé 1, la gravure sur la couche supplémentaire 21 laisse toute liberté sur la géométrie des motifs 23, 25 et 27. Ainsi, notamment, les motifs 23 et 25 ne sont pas forcément circulaires mais, par exemple, elliptiques ou comporter un diamètre intérieur non circulaire. Il en est de même, notamment, pour les diamètres intérieurs 10 et 24 qui ne sont pas forcément circulaires mais, par exemple, polygonaux ce qui pourrait permettre d'améliorer la transmission d'effort en rotation avec un axe 49 de forme correspondante. Enfin, chaque diamètre 10, 24 peut ne pas être de forme identique.

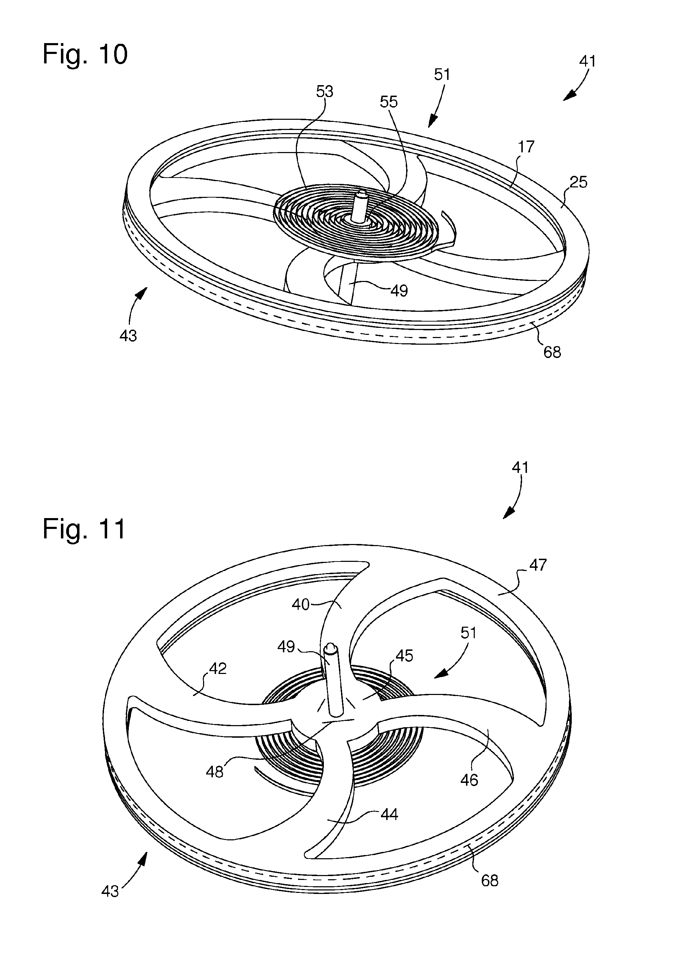

Préférentiellement, le motif 23 réalisé dans la couche supplémentaire 21 est de forme similaire et sensiblement à l'aplomb du motif 19 réalisé dans la couche supérieure 5. Cela signifie que les cavités 10 et 24 formant respectivement le diamètre intérieur des motifs 19 et 23 communiquent ensemble et sont sensiblement l'un au-dessus de l'autre. Dans l'exemple illustré aux figures 10 à 15, les motifs 23 et 19 forment la virole 55, 55', 55", 55"' respectivement de l'organe régulateur 41, 41', 41" et du spiral 51 "' qui s'étend en hauteur sur les couches 5 et 21.

Préférentiellement, le motif 25 réalisé dans la couche supplémentaire 21 est de forme similaire et sensiblement à l'aplomb du motif 17 réalisé dans la couche supérieure 5. Dans l'exemple illustré, les motifs 25 et 17 forment une partie de la serge 47, 47', 47" du balancier 43, 43', 43" de l'organe régulateur 41, 41', 41" qui s'étend en hauteur notamment sur les couches 5 et 21. On note cependant que, dans l'exemple illustré à la figure 4, les ponts de matières 18 ne sont pas reproduits et que la cavité 22 dans la couche supplémentaire 21 forme un anneau continu au contraire des cavités 12, 13, 14 et 15 situées débouchantes sous elle à la figure 4.

Préférentiellement, les motifs 23 et 27 sont gravés en même temps et forment une pièce monobloc dans la couche supplémentaire 21. Dans l'exemple illustré aux figures 10 à 15, les motifs 23 et 27 forment le ressort-spiral 53, 53', 53", 53"' et la partie haute de la virole 55, 55', 55", 55"' de l'organe régulateur 41, 41', 41" et du spiral 51'". On voit également que la courbe externe du motif 27 illustré à la figure 4 est ouverte. Cette dernière caractéristique associée à l'espacement par rapport à la couche inférieure 7 réalisé par le motif 19 permet la réalisation d'un pitonnage de ladite courbe externe à l'aide d'une raquetterie.

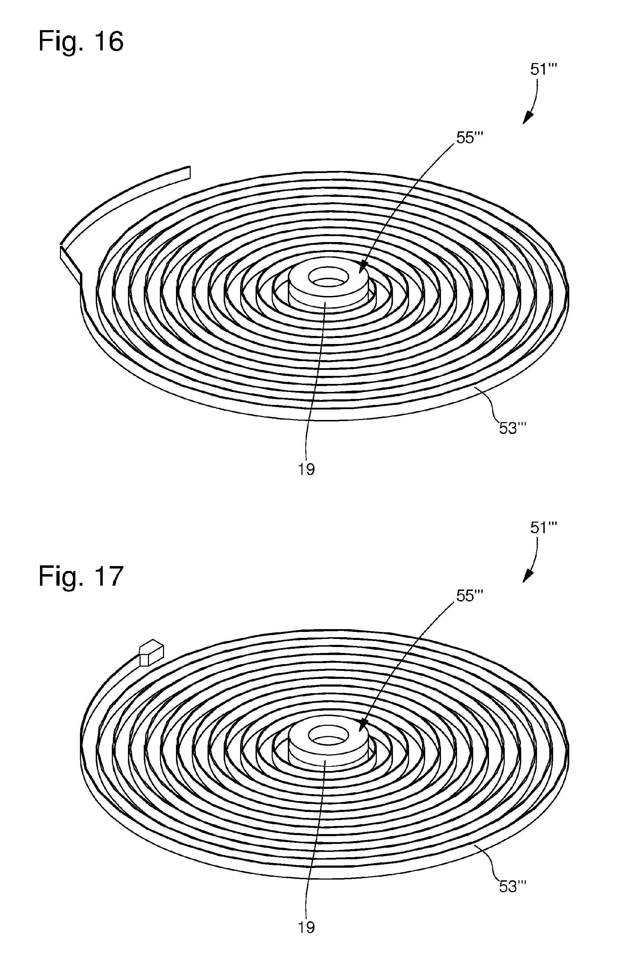

Cependant, avantageusement selon le procédé 1, la gravure sur la couche supplémentaire 21 laisse toute liberté sur la géométrie du motif 27. Ainsi, notamment, le motif 27 peut ne pas comporter de courbe externe ouverte mais, par exemple, comporter sur l'extrémité de la courbe externe un plot apte à servir de point d'attache fixe, c'est-à-dire sans nécessité de raquetterie comme, par exemple, illustré à la figure 17.

Le motif 27 peut également comprendre une spire interne comportant une courbe du type Grossmann permettant d'améliorer sa concentricité de développement comme expliqué dans le document EP 1 612 627 incorporé par référence à la présente description.

A la suite de cette quatrième étape 103, on comprend que les motifs 23 et 27 gravés dans la couche supplémentaire 21 sont uniquement reliés par le dessous du motif 23, avec une très forte adhérence, au-dessus du motif 19 gravé de la couche supérieure 5 (le motif 19 étant lui-même relié, avec une très forte adhérence, à la couche inférieure 7). Les motifs 23 et 27 ne sont donc plus en contact direct avec la couche supplémentaire 21. De même, le motif 25 n'est plus en contact direct avec la couche supplémentaire 21 mais uniquement relié, avec une très forte adhérence, au motif 17 gravé de la couche supérieure 5.

Préférentiellement comme représenté en traits interrompus à la figure 9, le procédé 1 peut comporter une cinquième étape 104 qui consiste à oxyder au moins le motif 27, c'est-à-dire le ressort-spiral 53, 53', 53", 53"' de l'organe de régulation 41, 41', 41" et du spiral 51'" afin d'ajuster son coefficient thermo-élastique mais également de le rendre mécaniquement plus résistant. Une telle étape d'oxydation est expliquée notamment dans le brevet EP 1 422 436 qui est incorporé par référence à la présente description.

A ce stade, c'est-à-dire après l'étape 103 ou 104, on comprend que le procédé 1 permet avantageusement de pourvoir produire uniquement le spiral 51'" comme visible à la figure 16 ou dans sa variante de la figure 17. En effet, un des avantages du procédé 1 est de pouvoir adapter la hauteur du motif 19 de la virole 55, 55', 55", 55"' faisant saillie du ressort-spiral 53, 53', 53", 53"' directement en choisissant l'épaisseur de la couche supérieure 5.

Lorsqu'un tel produit 51'", visible à la figure 16 ou 17, est souhaité, le procédé 1 tel qu'expliqué ci-dessus doit être adapté et s'arrêter après l'étape 103 ou 104. Une première adaptation consiste à ne pas former l'ébauche de la serge de balancier, c'est-à-dire ne pas graver les motifs 17 et 25 lors des étapes 101 et 103.

Incidemment, une deuxième adaptation consiste à prévoir, lors de l'ébauche des motifs 19, 23 ou 27, la formation de ponts de matière sur une autre partie que le motif 17 qui n'est plus formé. De tels ponts de matière peuvent notamment être formés soit sur le motif 19 lors de l'étape 101 ou soit sur le motif 27 à l'extrémité, par exemple, de la dernière spire lors de l'étape 103. La troisième adaptation du procédé 1 pourrait alors consister à retirer la couche inférieure 7, par exemple, par attaque chimique et/ou mécanique. Enfin, dans une étape 106, le spiral 51'" ainsi obtenu serait libéré du substrat 3 comme expliqué ci-dessous.

A la suite de cette étape 106, on obtient donc un spiral 51'" monobloc formé intégralement en matériaux à base de silicium, comme visible aux figures 16 et 17. On comprend donc qu'il n'y a plus de problème d'assemblage car il est directement réalisé pendant la fabrication de du spiral 51'". Ce dernier comprend un ressort-spiral 53"' monté coaxialement à une virole 55'".

Comme expliqué ci-dessus, la virole 55"' est formée par le motif 23 de la couche supplémentaire 21 et du motif 19 de la couche supérieure 5. Préférentiellement, ce motif 19 est utilisé comme moyen d'espacement entre le spiral 51'" et un autre organe afin de pouvoir, par exemple, pitonner le ressort-spiral 53"' à l'aide d'une raquetterie à l'aide de la variante du type à courbe externe ouverte de la figure 16. Le motif 19 est également utile comme moyen de guidage du spiral 51'" en augmentant la hauteur de la virole 55'".

Cependant, avantageusement selon le procédé 1, la gravure sur la couche supplémentaire 21 laisse toute liberté sur la géométrie du ressort-spiral 53'". Ainsi, notamment, le ressort-spiral 53"' peut ne pas comporter de courbe externe ouverte mais, par exemple comme illustré à la figure 17, comporter sur l'extrémité de la courbe externe un plot apte à servir de point d'attache fixe, c'est-à-dire sans nécessité de raquetterie.

Préférentiellement, le spiral 51'" est apte à recevoir un axe de balancier par les cavités 24 et 10. Un tel axe peut être fixé sur le diamètre intérieur 24 ou 10 de la virole 55"' par exemple à l'aide de moyens élastiques gravés dans une partie de la virole 55"' en matériau à base de silicium. De tels moyens élastiques peuvent, par exemple, prendre la forme de ceux divulgués dans les figures 10A à 10E du brevet EP 1 655 642 ou ceux divulgués dans les figures 1, 3 et 5 du brevet EP 1 584 994, lesquels brevets sont incorporés par référence à la présente description.

Bien entendu, la forme générale de la virole 55"' n'est pas limitée aux exemples des figures 16 et 17. Ainsi, son diamètre intérieur, c'est-à-dire les cavités 24 et 10 peuvent ou non être uniforme. En effet, à titre d'exemple, la cavité 10 du motif 19 pourrait être de section circulaire et globalement plus grande que celle de la cavité 24 du motif 23 qui pourrait être de forme polygonale. Une telle configuration permettrait de faire coopérer, préférentiellement contre le diamètre intérieur du motif 23, un axe de surface externe polygonale de forme correspondante à celle de la cavité 24.

Avantageusement selon l'invention, si un organe régulateur 41, 41', 41" est préféré, après la quatrième étape 103 ou préférentiellement après la cinquième étape 104, le procédé 1 peut comporter trois modes de réalisations A, B et C comme illustré à la figure 9. Cependant, chacun des trois modes de réalisation A, B et C se termine par la même étape finale 106 consistant à libérer du substrat 3 l'organe régulateur 41, 41', 41" fabriqué.

Avantageusement, l'étape 106 de libération peut alors être simplement réalisée en fournissant un effort à l'organe régulateur 41, 41', 41" apte à casser ses ponts de matière 18. Cet effort peut, par exemple, être généré manuellement par un opérateur ou par usinage.

Selon le mode de réalisation A, dans une sixième étape 105, comme visible à la figure 5, des cavités 26, 28, 29, 30, 31 et 32 sont sélectivement gravées, par exemple, par un procédé du type DRIE semblable à celui des étapes 101 et 103, dans la couche inférieure 7 en matériau à base de silicium. Ces cavités 26, 28, 29, 30, 31 et 32 permettent de former un motif 34 définissant les contours intérieur et extérieur d'une partie en silicium de l'organe régulateur 41.

Dans l'exemple illustré à la figure 5, le motif 34 est sensiblement en forme de jante à quatre bras. Cependant, avantageusement selon le procédé 1, la gravure sur la couche inférieure 7 laisse toute liberté sur la géométrie du motif 34. Ainsi, notamment, le nombre et la géométrie des bras peuvent être différents tout comme la jante n'est pas forcément circulaire mais, par exemple, elliptique. De plus, les bras peuvent être plus élancés afin d'autoriser leur déformation en cas de choc transmis sur l'organe régulateur.

Préférentiellement, une partie du motif 34 réalisé dans la couche inférieure 7 est de forme similaire et sensiblement à l'aplomb des motifs 17 et 25 réalisés respectivement dans les couches supérieure 5 et supplémentaire 21. Dans l'exemple illustré à la figure 5, le motif 34 forme, avec les motifs 17 et 25, le balancier 43 de l'organe régulateur 41 dont la serge 47 s'étend donc en hauteur sur la totalité des couches 5, 7 et 21.

De plus, préférentiellement, la cavité 26 du motif 34 est sensiblement en prolongement des cavités 10 et 24 formant le diamètre intérieur des motifs 19 et 23. Dans l'exemple illustré, les cavités successives 24, 10 et 26 forment ainsi un diamètre intérieur apte à recevoir l'axe de balancier 49 de l'organe régulateur 41. On note enfin que, dans l'exemple illustré à la figure 5, les ponts de matières 18 ne sont pas reproduits dans la couche inférieure 7 et que la cavité 28, à la manière de la cavité 22, forme un anneau continu au contraire des cavités 12, 13, 14 et 15 situées débouchantes sous elle à la figure 5.

A la suite de cette sixième étape 105, on comprend que le motif 34 gravé dans la couche inférieure 7 est uniquement relié, avec une très forte adhérence, aux motifs 17 et 19 gravés de la couche supérieure 5. Le motif 34 n'est donc plus en contact direct avec la couche inférieure 7.

A la suite de l'étape finale 106 expliquée ci-dessus, on obtient donc, à l'aide du premier mode de réalisation A, un organe régulateur 41 monobloc formé intégralement en matériaux à base de silicium, comme visible aux figures 10 et 11. On comprend donc qu'il n'y a plus de problème d'assemblage car il est directement réalisé pendant la fabrication de l'organe régulateur 41. Ce dernier comprend un balancier 43 dont le moyeu 45 est raccordé d'une part radialement à la serge 47 par quatre bras 40, 42, 44 et 46 et, d'autre part, axialement au spiral 51, le spiral 51 comprend un ressort-spiral 53 et une virole 55.

Comme expliqué ci-dessus, la serge 47 est formée par l'anneau périphérique du motif 34 de la couche inférieure 7 mais également par les motifs 17 et 25 des couches respectives supérieure 5 et supplémentaire 21. De plus, la virole 55 est formée par le motif 23 de la couche supplémentaire 21 et du motif 19 de la couche supérieure 5. Préférentiellement, ce motif 19 est utilisé comme moyen d'espacement entre le spiral 51 et le balancier 43 afin de pouvoir, par exemple, pitonner le ressort-spiral 53 à l'aide d'une raquetterie. Le motif 19 est également utile comme moyen de guidage du spiral 51 en augmentant la hauteur de la virole 55.

Cependant, avantageusement selon le procédé 1, la gravure sur la couche supplémentaire 21 laisse toute liberté sur la géométrie du ressort-spiral 53. Ainsi, notamment, le ressort-spiral 53 peut ne pas comporter de courbe externe ouverte mais, par exemple, comporter sur l'extrémité de la courbe externe un bourrelet apte à servir de point d'attache fixe, c'est-à-dire sans nécessité de raquetterie.

Préférentiellement, l'organe régulateur 41 est apte à recevoir un axe de balancier 49 par les cavités 24, 10 et 26. Avantageusement selon l'invention, l'organe régulateur 41 étant monobloc, il n'est pas nécessaire de fixer l'axe de balancier 49 à la virole 55 et au balancier 43 mais uniquement à l'un des deux.

Préférentiellement, l'axe de balancier 49 est fixé sur le diamètre intérieur 26 du balancier 43 par exemple à l'aide de moyens élastiques 48 gravés dans le moyeu 45 en matériau à base de silicium. De tels moyens élastiques 48 peuvent, par exemple, prendre la forme de ceux divulgués dans les figures 10A à 10E du brevet EP 1 655 642 ou ceux divulgués dans les figures 1, 3 et 5 du brevet EP 1 584 994, lesquels brevets sont incorporés par référence à la présente description. De plus, de manière préférée, les cavités 24 et 10 comportent des sections de plus grandes dimensions que celle de la cavité 26 afin d'éviter que l'axe de balancier 49 soit en contact gras avec la virole 55.

On comprend donc que l'effort du spiral 51 est soumis au balancier 43 uniquement par la virole 55 et inversement car ils sont tous trois formés de manière monobloc. L'axe de balancier 49 ne reçoit donc d'effort de l'organe régulateur 41 que par l'intermédiaire du moyeu 45 du balancier 43.

Selon un second mode de réalisation B, le procédé 1 comporte, après l'étape 103 ou 104, une sixième étape 107, comme visible à la figure 6, consistant à mettre en oeuvre un processus du type LIGA (acronyme très connu provenant de l'allemand « Röntgenlithographie, Galvanoformung & Abformung »). Un tel processus comporte une succession d'étapes permettant d'électrodéposer selon une forme particulière un métal sur la couche inférieure 7 du substrat 3 à l'aide d'une résine photostructurée. Ce processus du type LIGA étant très connu, il ne sera pas d'avantage détaillé ci-après. Préférentiellement, le métal déposé peut être, par exemple, de l'or ou du nickel ou un de leurs alliages.

Dans l'exemple illustré à la figure 6, l'étape 107 peut consister à déposer un anneau crénelé 61 et/ou un cylindre 63. Dans l'exemple illustré à la figure 6, l'anneau 61 comporte une série de plots 65 sensiblement en arc de cercle et est destiné à, avantageusement, augmenter la masse du futur balancier 43'. En effet, un des avantages du silicium est sa faible sensibilité aux variations de température. Cependant, il possède l'inconvénient d'avoir une faible densité. Une première caractéristique de l'invention consiste donc à augmenter la masse du balancier 43' à l'aide de métal obtenu par électrodéposition afin d'augmenter l'inertie du futur balancier 43'. Toutefois, afin de garder les avantages du silicium, le métal déposé sur la couche inférieure 7 comporte un écartement entre chaque plot 65 apte à compenser les dilatations thermiques de l'anneau 23.

Dans l'exemple illustré à la figure 6, le cylindre 63 est destiné à recevoir, avantageusement, par chassage un axe de balancier 49. En effet, un autre inconvénient du silicium réside dans ses très faibles zones élastique et plastique ce qui le rend très cassant. Une autre caractéristique de l'invention consiste donc à réaliser le serrage de l'axe de balancier 49 non pas contre le silicium du balancier 43' mais sur le diamètre intérieur 67 du cylindre métallique 63 électrodéposé lors de l'étape 107. Avantageusement selon le procédé 1, le cylindre 63 obtenu par électrodéposition laisse toute liberté quant à sa géométrie. Ainsi, notamment, le diamètre intérieur 67 n'est pas forcément circulaire mais, par exemple, polygonal ce qui pourrait permettre d'améliorer la transmission d'effort en rotation avec un axe 49 de forme correspondante.

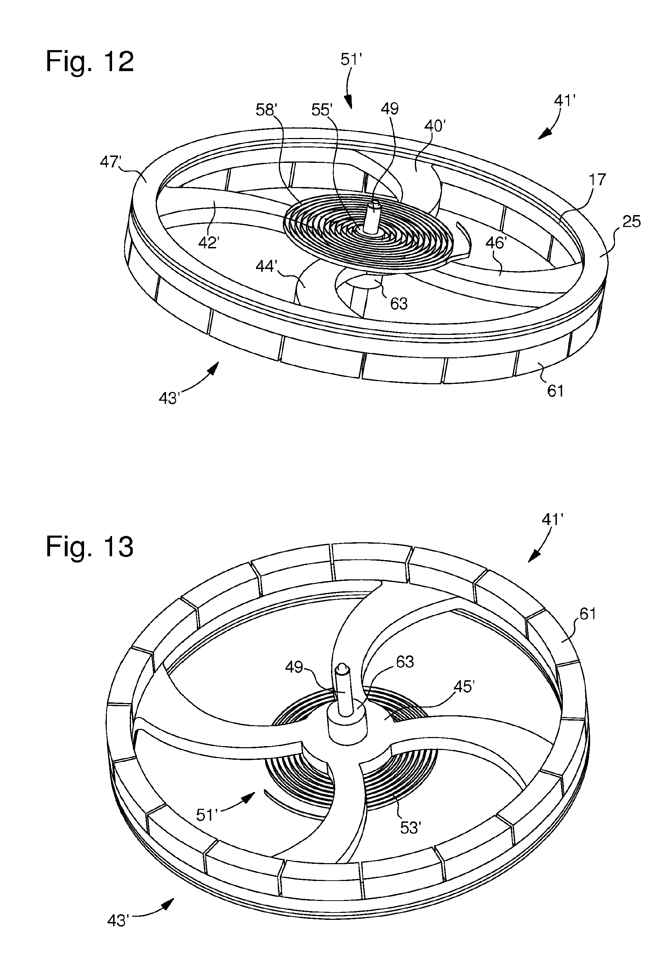

Dans une septième étape 108, similaire à l'étape 105 visible à la figure 5, des cavités sont sélectivement gravées, par exemple, par un procédé du type DRIE, dans la couche inférieure 7 en matériau à base de silicium. Ces cavités permettent de former un motif de balancier semblable au motif 34 du mode de réalisation A. Comme illustré dans l'exemple des figures 12 et 13, le motif obtenu peut être sensiblement en forme de jante à quatre bras. Cependant, avantageusement selon le procédé 1, la gravure sur la couche inférieure 7 laisse toute liberté sur la géométrie du motif 34. Ainsi, notamment, le nombre et la géométrie des bras peuvent être différents tout comme la jante n'est pas forcément circulaire mais, par exemple, elliptique. De plus, les bras peuvent être plus élancés afin d'autoriser leur déformation en cas de choc transmis sur l'organe régulateur.

Préférentiellement, une partie motif de balancier réalisé dans la couche inférieure 7 est de forme similaire et sensiblement à l'aplomb des motifs 17 et 25 réalisés respectivement lors des étapes 101 et 103 dans les couches supérieure 5 et supplémentaire 21. Dans l'exemple illustré aux figures 12 et 13, le motif de balancier forme, avec les motifs 17 et 25 et les parties métalliques 61 et/ou 63, le balancier 43' de l'organe régulateur 41' dont la serge 47' s'étend donc en hauteur sur la totalité des couches 5, 7 et 21 et des parties métalliques 61 et/ou 63.

De plus, préférentiellement, comme dans le mode de réalisation A, les cavités successives forment ainsi un diamètre intérieur apte à recevoir l'axe de balancier 49 de l'organe régulateur 41'. On note enfin que les ponts de matières 18 peuvent ne pas être non plus reproduits dans la couche inférieure 7.

A la suite de cette septième étape 108, on comprend que le motif de balancier gravé dans la couche inférieure 7 est uniquement relié, avec une très forte adhérence, aux motifs 17 et 19 de la couche supérieure 5 gravés lors de l'étape 101. Le motif de balancier n'est donc plus en contact direct avec la couche inférieure 7.

A la suite de l'étape finale 106 expliquée ci-dessus, on obtient donc, à l'aide du second mode de réalisation B, un organe régulateur 41' monobloc formé en matériaux à base de silicium avec une ou deux parties 61, 63 en métal comme visible aux figures 12 et 13. On comprend donc qu'il n'y a plus de problème d'assemblage car il est directement réalisé pendant la fabrication de l'organe régulateur 41'. Ce dernier comprend un balancier 43' dont le moyeu 45' est raccordé d'une part radialement à la serge 47' par quatre bras 40', 42', 44' et 46' et, d'autre part, axialement au spiral 51', le spiral 51' comprend un ressort-spiral 53' et une virole 55'.

Comme expliqué ci-dessus, la serge 47' est formée par l'anneau périphérique du motif de balancier de la couche inférieure 7 mais également par les motifs 25 et 17 des couches respectives supérieure 5 et supplémentaire 21 et, éventuellement, de la partie métallique 61. De plus, la virole 55' est formée par le motif 23 de la couche supplémentaire 21 et du motif 19 de la couche supérieure 5. Préférentiellement, ce motif 19 est utilisé comme moyen d'espacement entre le spiral 51' et le balancier 43' afin de pouvoir pitonner le ressort-spiral 53' à l'aide d'une raquetterie. Le motif 19 est également utile comme moyen de guidage du spiral 51' en augmentant la hauteur de la virole 55'.

Cependant, avantageusement selon le procédé 1, la gravure sur la couche supplémentaire 21 laisse toute liberté sur la géométrie du ressort-spiral 53'. Ainsi, notamment, le ressort-spiral 53' peut ne pas comporter de courbe externe ouverte mais, par exemple, comporter sur l'extrémité de la courbe externe un bourrelet apte à servir de point d'attache fixe, c'est-à-dire sans nécessité de raquetterie.

Préférentiellement, l'organe régulateur 41' est apte à recevoir un axe de balancier 49 dans son diamètre intérieur. Avantageusement selon l'invention, l'organe régulateur 41' étant monobloc, il n'est pas nécessaire de fixer l'axe de balancier 49 à la virole 55' et au balancier 43' mais uniquement à l'un des deux.

Dans l'exemple illustré aux figures, l'axe de balancier 49 est fixé, de manière préférée, sur le diamètre intérieur 67 de la partie métallique 63 par exemple par chassage. De plus, préférentiellement, les cavités 24 et 10 comportent des sections de plus grandes dimensions que celle du diamètre intérieur 67 de la partie métallique 63 afin d'éviter que l'axe de balancier 49 soit en contact gras avec la virole 55'.

On comprend donc que l'effort du spiral 51' est soumis au balancier 43' uniquement par la virole 55' et inversement car ils sont tous trois formés de manière monobloc. L'axe de balancier 49 ne reçoit donc d'effort de l'organe régulateur 41' que, préférentiellement, par l'intermédiaire de la partie métallique 63 du moyeu 45' du balancier 43'.

De plus, dans la mesure où une partie métallique 61 a été déposée, l'inertie du balancier 43' est avantageusement amplifiée. En effet, la densité d'un métal étant beaucoup plus grande que celle du silicium, la masse du balancier 43' est augmentée et, incidemment, également son inertie.

Selon un troisième mode de réalisation C, le procédé 1 comporte, après l'étape 103 ou 104, dans une sixième étape 109, comme visible à la figure 7, consistant à sélectivement graver des cavités 60 et/ou 62, par exemple, par un procédé du type DRIE, selon une profondeur limitée dans la couche inférieure 7 en matériau à base de silicium. Ces cavités 60, 62 permettent de former des évidements aptes à servir de contenant pour au moins une partie métallique. Comme dans l'exemple illustré à la figure 7, les cavités 60 et 62 obtenues peuvent être respectivement en forme d'anneau et de disque. Cependant, avantageusement selon le procédé 1, la gravure sur la couche inférieure 7 laisse toute liberté sur la géométrie des cavités 60 et 62.

Dans une septième étape 110, comme illustré à la figure 8, le procédé 1 comporte la mise en oeuvre d'un processus du type croissance galvanique ou du type LIGA permettant de combler les cavités 60 et/ou 62 selon une forme métallique particulière. Préférentiellement, le métal déposé peut être, par exemple, de l'or ou du nickel ou un de leurs alliages.

Dans l'exemple illustré à la figure 8, l'étape 110 peut consister à déposer un anneau crénelé 64 dans la cavité 60 et/ou un cylindre 66 dans la cavité 62. De plus, dans l'exemple illustré à la figure 8, l'anneau 64 comporte une série de plots 69 sensiblement en arc de cercle et est destinée à, avantageusement, augmenter la masse du futur balancier 43". En effet, comme déjà expliqué ci-dessus, un inconvénient du silicium réside dans sa faible densité. Ainsi comme pour le mode de réalisation B, une caractéristique de l'invention consiste donc à augmenter la masse du balancier 43" à l'aide de métal obtenu par électrodéposition afin d'augmenter l'inertie du futur balancier 43". Toutefois, afin de garder les avantages du silicium, le métal déposé sur la couche inférieure 7 comporte un écartement entre chaque plot 69 apte à compenser les dilatations thermiques de l'anneau 64.

Dans l'exemple illustré à la figure 8, le cylindre 66 est destiné à recevoir, avantageusement, par chassage un axe de balancier 49. En effet, comme déjà expliqué ci-dessus, une caractéristique avantageuse selon l'invention consiste à réaliser le serrage de l'axe de balancier 49 non pas contre le matériau à base de silicium mais sur le diamètre intérieur 70 du cylindre métallique 66 électrodéposé lors de l'étape 110. Avantageusement selon le procédé 1, le cylindre 66 obtenu par électrodéposition laisse toute liberté quant à sa géométrie. Ainsi, notamment, le diamètre intérieur 70 n'est pas forcément circulaire mais, par exemple, polygonal ce qui pourrait permettre d'améliorer la transmission d'effort en rotation avec un axe 49 de forme correspondante.

Préférentiellement, le procédé 1 peut comporter, dans une huitième étape 111, consistant à polir le ou les dépôts métalliques 64, 66 réalisés lors de l'étape 110 afin de les rendre plans.

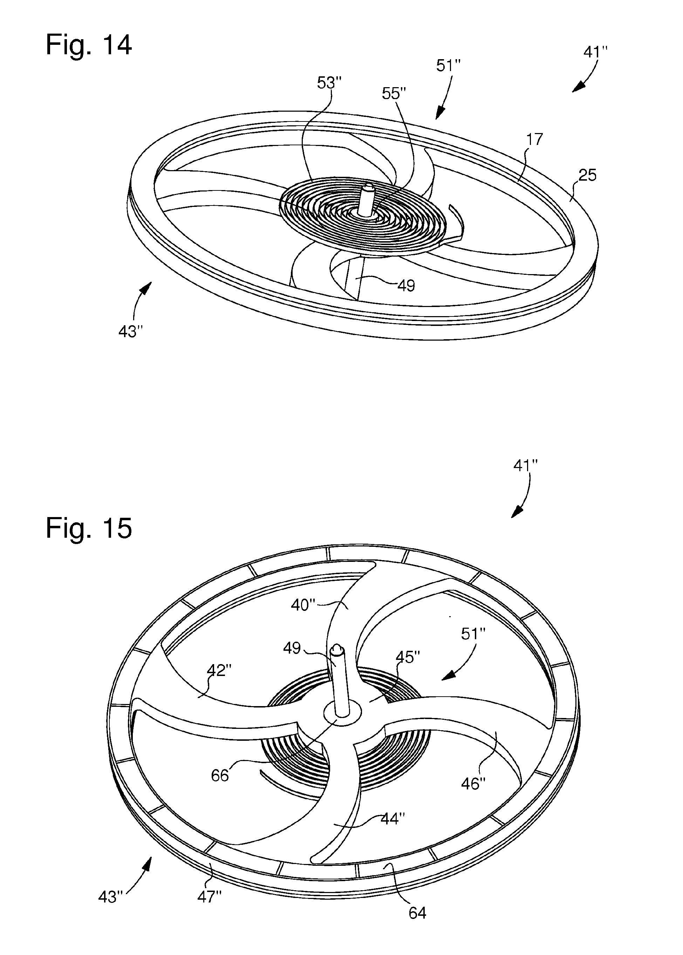

Dans une neuvième étape 112, similaire aux étapes 105 ou 108 notamment visible à la figure 5, des cavités sont sélectivement gravées, par exemple, par un procédé du type DRIE, dans la couche inférieure 7 en matériau à base de silicium. Ces cavités permettent de former un motif de balancier semblable au motif 34 du mode de réalisation A. Comme illustré dans l'exemple des figures 14 et 15, le motif obtenu peut être sensiblement en forme de jante à quatre bras. Cependant, avantageusement selon le procédé 1, la gravure sur la couche inférieure 7 laisse toute liberté sur la géométrie du motif 34. Ainsi, notamment, le nombre et la géométrie des bras peuvent être différents tout comme la jante n'est pas forcément circulaire mais, par exemple, elliptique. De plus, les bras peuvent être plus élancés afin d'autoriser leur déformation en cas de choc transmis sur l'organe régulateur.

Préférentiellement, le motif de balancier réalisé dans la couche inférieure 7 est de forme similaire et sensiblement à l'aplomb des motifs 17 et 25 réalisés respectivement lors des étapes 101 et 103 dans les couches supérieure 5 et supplémentaire 21. Dans l'exemple illustré, le motif de balancier forme, avec les motifs 17 et 25 et les parties métalliques 64 et/ou 66, le balancier 43" de l'organe régulateur 41" dont la serge 47" s'étend donc en hauteur sur la totalité des couches 5, 7 et 21.

De plus, préférentiellement, comme dans le mode de réalisation A, les cavités successives forment ainsi un diamètre intérieur apte à recevoir l'axe de balancier 49 de l'organe régulateur 41 ". On note enfin que les ponts de matières 18 ne sont pas non plus reproduits dans la couche inférieure 7.

A la suite de cette neuvième étape 112, on comprend que le motif de balancier gravé dans la couche inférieure 7 est uniquement relié, avec une très forte adhérence, aux motifs 17 et 19 de la couche supérieure 5 gravés lors de l'étape 101. Le motif de balancier n'est donc plus en contact direct avec la couche inférieure 7.

A la suite de l'étape finale 106 expliquée ci-dessus, on obtient donc un organe régulateur 41" monobloc formé en matériaux à base de silicium avec une ou deux parties 64, 66 en métal comme visible aux figures 14 et 15. On comprend donc qu'il n'y a plus de problème d'assemblage car il est directement réalisé pendant la fabrication de l'organe régulateur 41 ". Ce dernier comprend un balancier 43" dont le moyeu 45" est raccordé d'une part radialement à la serge 47" par quatre bras 40", 42", 44" et 46" et, d'autre part, axialement au spiral 51 ", le spiral 51" comprenant un ressort-spiral 53" et une virole 55".

Comme expliqué ci-dessus, la serge 47" est formée par l'anneau périphérique du motif de balancier de la couche inférieure 7 mais également par les motifs 25 et 17 des couches respectives supérieure 5 et supplémentaire 21 et, éventuellement, de la partie métallique 64. De plus, la virole 55" est formée par le motif 23 de la couche supplémentaire 21 et du motif 19 de la couche supérieure 5. Préférentiellement, ce motif 19 est utilisé comme moyen d'espacement entre le spiral 51" et le balancier 43" afin de pouvoir, par exemple, pitonner le ressort-spiral 53" à l'aide d'une raquetterie. Le motif 19 est également utile comme moyen de guidage du spiral 51" en augmentant la hauteur de la virole 55".

Cependant, avantageusement selon le procédé 1, la gravure sur la couche supplémentaire 21 laisse toute liberté sur la géométrie du ressort-spiral 53". Ainsi, notamment, le ressort-spiral 53" peut ne pas comporter de courbe externe ouverte mais, par exemple, comporter sur l'extrémité de la courbe externe un bourrelet apte à servir de point d'attache fixe, c'est-à-dire sans nécessité de raquetterie.

Préférentiellement, l'organe régulateur 41" est apte à recevoir un axe de balancier 49 dans son diamètre intérieur. Avantageusement selon l'invention, l'organe régulateur 41" étant monobloc, il n'est pas nécessaire de fixer l'axe de balancier 49 à la virole 55" et au balancier 43" mais uniquement à l'un des deux.

Préférentiellement, dans l'exemple illustré aux figures 14 et 15, l'axe de balancier 49 est fixé sur le diamètre intérieur 70 de la partie métallique 66 par exemple par chassage. De plus, de manière préférée, les cavités 24 et 10 comportent des sections de plus grandes dimensions que celle du diamètre intérieur 70 de la partie métallique 66 afin d'éviter que l'axe de balancier 49 soit en contact gras avec la virole 55".

On comprend donc que l'effort du spiral 51" est soumis au balancier 43" uniquement par la virole 55" et inversement car ils sont tous trois formés de manière monobloc. L'axe de balancier 49 ne reçoit donc d'effort de l'organe régulateur 41" que, préférentiellement, par l'intermédiaire de la partie métallique 66 du moyeu 45" du balancier 43".

De plus, dans la mesure où une partie métallique 64 a été déposée, l'inertie du balancier 43" est avantageusement amplifiée. En effet, la densité d'un métal étant beaucoup plus grande que celle du silicium, la masse du balancier 43" est augmentée et, incidemment, également son inertie.

Selon les trois modes de réalisation A, B et C, il faut comprendre que l'organe régulateur final 41, 41' et 41" est ainsi assemblé avant d'être structuré, c'est-à-dire avant d'être gravé et/ou modifié par électrodéposition. Cela permet avantageusement de minimiser les dispersions engendrées par les assemblages actuels d'un balancier avec un spiral.

Il faut également noter que la très bonne précision structurelle d'une gravure ionique réactive profonde permet de diminuer le rayon de départ de chacun du ressort-spiraux 53, 53', 53", 53'", c'est-à-dire que le diamètre extérieur de leur virole 55, 55', 55", 55'", ce qui autorise la miniaturisation des diamètres intérieurs et extérieurs de la virole 55, 55', 55", 55"'.

Avantageusement selon l'invention, on comprend également qu'il est possible que plusieurs organes régulateur 41, 41', 41" et spiraux 51'" puissent être réalisés sur le même substrat 3 ce qui autorise une production en série.

Bien entendu, la présente invention ne se limite pas à l'exemple illustré mais est susceptible de diverses variantes et modifications qui apparaîtront à l'homme de l'art. En particulier, les motifs 17 et 25 gravés lors de étapes 101 et 103 dans les couches 5 et 21 peuvent ne pas se limiter à un état de surface plan mais peuvent intégrer lors desdites étapes au moins un ornement permettant de décorer au moins une des faces de la serge 47, 47', 47" ce qui peut être utile notamment dans le cas des pièces d'horlogerie du type squelette.

Il est également possible que les parties métalliques 63, 66 électrodéposées selon les modes de réalisation B et C soient interverties, c'est-à-dire que la partie en saillie 63 du mode B soit remplacée par la partie intégrée 66 du mode C ou inversement (ce qui ne nécessite qu'une adaptation minime du procédé 1) ou même que la partie 66 intégrée dans le moyeu fasse saillie de la couche inférieure 7.

Selon un raisonnement similaire, Il est également possible que les parties métalliques 61, 64 électrodéposées dans les modes de réalisation B et C soient interverties, c'est-à-dire que la partie en saillie 61 du mode B soit remplacée par la partie intégrée 64 du mode C ou inversement ou même que la partie 64 intégrée dans la serge fasse saillie de la couche inférieure 7.

De plus, avantageusement, le procédé 1 peut prévoir en outre, a posteriori de l'étape de libération 106, une étape d'adaptation de la fréquence de l'organe régulateur 41, 41', 41". Une telle étape pourrait alors consister à graver, par exemple par laser, des évidements 68 aptes à modifier la fréquence de fonctionnement dudit organe régulateur. De tels évidements 68, comme illustrés dans l'exemple des figures 10 et 11, pourraient, par exemple, être réalisés sur une des parois périphériques du motif 34 appartenant à la serge 47, 47', 47" et/ou sur une des parties métalliques 61, 64 électrodéposées. De manière inverse, des structures réglantes du type masselotte peuvent également être envisagées afin d'augmenter l'inertie et régler de la fréquence.

Il peut également être prévu qu'une couche conductrice soit déposée sur au moins une partie du spiral 51'" afin d'éviter des problèmes d'isochronisme. Une telle couche peut être du type divulgué dans le document EP 1 837 722 incorporé par référence dans la présente description.

Enfin, une étape de polissage du type de l'étape 111 peut également être réalisée entre l'étape 107 et l'étape 108. Il peut également être envisagé qu'une étape de réalisation d'un dépôt métallique 63, 66, du type obtenu par les modes de réalisation B ou C, soit réalisée non pas sur le balancier mais, dans le cas de la fabrication du spiral 51'", sur la couche supplémentaire 21 avant l'étape 103 ou sur la couche supérieure 5 après l'étape 106 de sorte à pouvoir chasser un axe non pas contre le matériau à base de silicium du diamètre intérieure de la virole 55"' mais contre ledit dépôt métallique.

## Revendications

1. Spiral (51'") comportant un ressort-spiral (53'") monté coaxialement sur une virole (55"'), lesquels sont réalisés dans une même couche (21) de matériau à base de silicium **caractérisé en ce que** la virole (55'") comporte une partie (19) en prolongement faisant saillie dudit ressort-spiral (53'") et qui est réalisé dans une deuxième couche (5) de matériau à base de silicium afin de pouvoir adapter l'espacement dudit spiral (51'") avec un autre élément tout en améliorant le guidage dudit spiral.

2. Spiral selon la revendication 1, **caractérisé en ce que** le ressort-spiral (53'") comporte au moins une partie en dioxyde de silicium afin de le rendre plus résistant mécaniquement et d'ajuster son coefficient thermo-élastique.

3. Spiral selon la revendication 1 ou 2, **caractérisé en ce que** la virole (55'") comporte un diamètre intérieur (10, 24) uniforme.

4. Spiral selon la revendication 1 ou 2, **caractérisé en ce que** le diamètre intérieur (10) de la partie (19) en prolongement est différent de celui (24) du reste de la virole (55"').

5. Spiral selon l'une des revendications précédentes, **caractérisé en ce que** le diamètre intérieur de la virole (55'") comporte au moins une partie de la section de forme circulaire.

6. Spiral selon l'une des revendications précédentes, **caractérisé en ce que** le diamètre intérieur de la virole (55'") comporte au moins une partie de la section de forme polygonale.

7. Spiral selon l'une des revendications précédentes, **caractérisé en ce que** la virole (55'") comporte une partie métallique permettant audit spiral de recevoir par chassage un axe.

8. Spiral selon l'une des revendications précédentes, **caractérisé en ce que** la spire interne du ressort-spiral (53'") comporte une courbe du type Grossmann afin d'améliorer la concentricité du développement dudit spiral.

9. Pièce d'horlogerie **caractérisée en ce qu'**elle comporte un spiral (51'") conforme à l'une des revendications précédente.

10. Procédé de fabrication (1) d'un spiral (51'") comportant les étapes suivantes :
a) se munir (100) d'un substrat (3) comportant une couche supérieure (5) et une couche inférieure (7) en matériaux à base de silicium ;
b) graver (101) sélectivement au moins une cavité (10, 11) dans la couche supérieure (5) pour définir le motif (19) d'une première partie (55'") en matériau à base de silicium dudit organe ;
**caractérisé en ce qu'**il comporte en outre les étapes suivantes :
c) solidariser (102), sur la couche supérieure (5) gravée du substrat (3), une couche supplémentaire (21) de matériau à base de silicium ;
d) graver (103) sélectivement au moins une cavité (20, 24) dans la couche supplémentaire (21) pour continuer le motif (19, 23) de ladite première partie (55'") et définir le motif (27) d'une deuxième partie (53'") en matériau à base de silicium dudit organe ;
e) libérer (106) l'organe (51'") du substrat (3).

11. Procédé de fabrication selon la revendication 10, **caractérisé en ce que** la première partie dudit spiral est une virole (55'") et la deuxième partie est un ressort-spiral (53"').

12. Procédé selon la revendication 10 ou 11, **caractérisé en ce que** l'étape e) comporte l'étape suivante :
f) retirer la couche inférieure (7) par attaque chimique et/ou mécanique.

13. Procédé selon l'une des revendications 10 à 12, **caractérisé en ce qu'**il comporte en outre après l'étape d) l'étape suivante :
g) oxyder la deuxième partie (53'") en matériau à base de silicium dudit organe afin d'ajuster son coefficient thermo-élastique mais également de la rendre mécaniquement plus résistant.

14. Procédé de fabrication selon l'une des revendications 10 à 13 **caractérisé en ce qu'**il comporte en outre avant l'étape d) l'étape suivante :
h) déposer (107, 110) sélectivement au moins une couche de métal sur la couche supplémentaire (21) pour définir le motif d'au moins une partie en métal dudit organe.

15. Procédé de fabrication selon la revendication 14, **caractérisé en ce que** l'étape h) comporte l'étape suivante :
i) faire croître (107) ledit dépôt par couches successives métalliques au moins partiellement sur la surface de la couche supplémentaire (21) afin de former une partie métallique (63) destinée à recevoir par chassage un axe.

16. Procédé de fabrication selon la revendication 14, **caractérisé en ce que** l'étape h) comporte les étapes suivantes :
j) graver (109) sélectivement au moins une cavité (62) dans la couche supplémentaire (21) destinée à recevoir ladite au moins une partie en métal ;
k) faire croître (110) ledit dépôt par couches successives métalliques au moins partiellement dans ladite au moins une cavité afin de former une partie métallique (63) destinée à recevoir par chassage un axe.

17. Procédé de fabrication selon l'une des revendications 14 à 16, **caractérisé en ce que** l'étape h) comporte la dernière étape suivante :
l) polir (111) le dépôt métallique (63, 66).

18. Procédé de fabrication selon l'une des revendications 10 à 17, **caractérisé en ce que** plusieurs organes (51 "') sont réalisés sur un même substrat (3).
